# EUROPEAN PATENT APPLICATION

(11) **EP 4 697 253 A1**
(43) Date of publication of application: **18.02.2026**
(21) Application number: 24788698.9
(22) Date of filing: 08.04.2024
(51) Int. Cl.: G06Q 50/04, G06Q 10/00

(54) **DESIGN ASSISTANCE DEVICE, DESIGN ASSISTANCE PROGRAM AND DESIGN ASSISTANCE METHOD**

(30) Priority: 13.04.2023 JP 2023065639
(71) Applicant: Chiyoda Corporation, Kanagawa 220-8765 (JP)
(72) Inventor: KAWAI, Eiji, Yokohama-shi Kanagawa 220-8765 (JP); FURUICHI, Kazuya, Yokohama-shi Kanagawa 220-8765 (JP); KOYAMA, Takanori, Yokohama-shi Kanagawa 220-8765 (JP)
(74) Representative: Gulde & Partner
(86) International application number: PCT/JP2024/014281
(87) International publication number: WO 2024/214674

(57) **Abstract**

A design of a system that produces a substance or energy using electric power is appropriately assisted. A design assistance device 10 comprises: a specification acquisition unit 21 configured to acquire specifications required for a final product produced in a plant that produces the final product from a material using electric power; a condition acquisition unit 22 configured to acquire conditions at a location of the plant that can affect suitability of a plurality of production routes for producing the final product from the material; and a production route selection unit 24 configured to select a recommended production route in the plant from the plurality of production routes, based on the specifications acquired by the specification acquisition unit 21 and the conditions acquired by the condition acquisition unit 22.

## Description

### Technical Field

The present disclosure relates to a technology for assisting in a design of a system that produces a substance or energy using electric power.

### Background Art

A technology (Power-to-X) for converting electric power into some form of energy for storage and utilization is gaining attention. For example, Patent Literature 1 discloses a technology that calculates capacities and operation plans of each facility, and a transport amount and a transport schedule for maximizing profit for a supply side, a consumer, or an entire gas energy supply and demand system, by using an energy flow optimization method that considers the timing of power generation using renewable energy, gas energy production, transport, and demand, with reference to a power generation amount DB storing information on a power generation amount, a demand amount DB storing information on a demand amount, a transportation means DB storing information on transportation means, a facility DB storing information on facilities, and an energy price DB storing information on an energy unit price.

### Citation List

### Patent Literature

[Patent Literature 1] Japanese Unexamined Patent Application Publication No. 2019-144897

### Summary of Invention

### Technical Problem

There are many factors that affect the construction and operation of a plant, such as supply sources of electric power and materials, reaction routes for producing a product from a material using electric power, restrictions on waste at a construction site of the plant, demand for the product, and a market price of the product. The inventors of the present invention recognized as a problem that it is difficult to find an optimal combination from among an enormous number of combinations of these factors.

An object of the present disclosure is to appropriately assist in the design, operation, production planning, and the like of a system that produces a substance or energy using electric power.

### Solution to Problem

To solve the above problem, a design assistance device according to an aspect of the present disclosure comprises: a specification acquisition unit configured to acquire specifications required for a final product produced in a plant that produces the final product from a material using electric power; a condition acquisition unit configured to acquire conditions at a location of the plant that can affect suitability of a plurality of production routes for producing the final product from the material; and a production route selection unit configured to select a recommended production route in the plant from the plurality of production routes, based on the specifications acquired by the specification acquisition unit and the conditions acquired by the condition acquisition unit.

Another aspect of the present disclosure is a design assistance program. This program causes a computer to function as: a specification acquisition unit configured to acquire specifications required for a final product produced in a plant that produces the final product from a material using electric power; a condition acquisition unit configured to acquire conditions at a location of the plant that can affect suitability of a plurality of production routes for producing the final product from the material; and a production route selection unit configured to select a recommended production route in the plant from the plurality of production routes, based on the specifications acquired by the specification acquisition unit and the conditions acquired by the condition acquisition unit.

Yet another aspect of the present disclosure is a design assistance method. This method causes a computer to execute the steps of: acquiring specifications required for a final product produced in a plant that produces the final product from a material using electric power; acquiring conditions at a location of the plant that can affect suitability of a plurality of production routes for producing the final product from the material; and selecting a recommended production route in the plant from the plurality of production routes, based on the specifications and the conditions.

Note that any combination of the above components, and any conversion of the expressions of the present disclosure among a method, a device, a system, a recording medium, a computer program, and the like are also effective as aspects of the present disclosure.

According to the present disclosure, it is possible to appropriately assist in the design, operation, production planning, and the like of a system that produces a substance or energy using electric power.

### Brief Description of Drawings

FIG. 1 is a diagram showing an example of a production route for producing a fuel in a fuel production plant.
FIG. 2 is a diagram showing a configuration of a design assistance device according to an embodiment.
FIG. 3 is a flowchart showing a procedure of a design assistance method according to the embodiment.

### Description of Embodiments

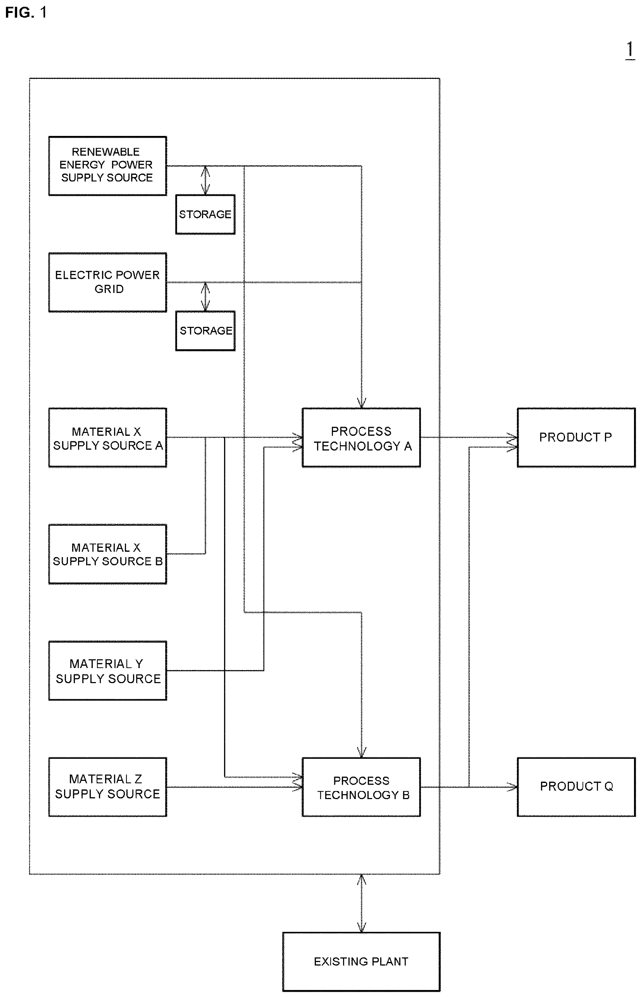

FIG. 1 shows an example of a production route for producing a fuel in a fuel production plant 1. In the fuel production plant 1 that produces a final product such as a liquid hydrocarbon fuel from a material using electric power, there are a plurality of production routes capable of producing the final product. For example, a process technology A produces a product P from a material X and a material Y using electric power. A process technology B produces a product P and a product Q from the material X and a material Z using electric power. As the electric power, electric power supplied from a renewable energy power supply source or stored electric power thereof can be used, and electric power supplied from an existing or new electric power grid or stored electric power thereof can also be used. Further, as the material X, which is a material for the process technology A and the process technology B, the material X supplied from a material X supply source A can be used, or the material X supplied from a material X supply source B can be used. In addition, electric power, materials, intermediate products, and the like may be interchanged with an existing plant. A process technology for converting a material or an intermediate product may include storage equipment. A plurality of process technologies may be executed in any order or combination. In FIG. 1, the production route of the final product including a supply route of electric power and an acquisition route of a material is shown in a simplified manner, but in reality, since there can be more power supply sources, materials, material supply sources, process technologies, intermediate products, final products, and the like, the production route may be more complex and diverse. An optimal method for obtaining electric power or a material may vary depending on a price of the electric power and the material, availability, a construction cost of a supply system for the electric power and the material, an operation cost, a yield, a useful life, and the like in a country or a region where the fuel production plant 1 is to be constructed.

Thus, when constructing the fuel production plant 1, it is necessary to find a production route capable of optimizing a construction cost, an operation cost, an operating rate, a profit, a product amount, a product yield, a carbon dioxide emission amount, and the like from among a plurality of production routes for producing the final product that meets required specifications. However, since there are many factors that affect the construction and operation of the plant, such as supply sources of electric power and materials, reaction routes for producing a product from a material using electric power, restrictions on waste at a construction site of the plant, demand for the product, and a market price of the product, it is difficult to find an optimal combination from among an enormous number of combinations of these factors.

The design assistance device of the present embodiment uses a prediction model for predicting a process executed in the fuel production plant 1 to predict a reaction rate, an amount, a yield, a carbon dioxide emission amount, a cost, and the like when a process is executed in each of constituent elements, such as a reactor or a distillation tower, that constitute a plurality of production routes. The design assistance device calculates a construction cost, an operation cost, an operating rate, a profit, a product amount, a product yield, a carbon dioxide emission amount, and the like of the fuel production plant 1 when each of the plurality of production routes is adopted, based on a prediction result. The design assistance device selects a production route that optimizes a predetermined objective function from the plurality of production routes. Thereby, since a configuration of the fuel production plant 1 in which an optimal production route is adopted can be accurately and quickly proposed according to specifications required for the fuel production plant 1 and a country or a region, etc. where the fuel production plant 1 is to be constructed, it is possible to appropriately assist in the design, operation, production planning, and the like of a system that produces a substance or energy using electric power.

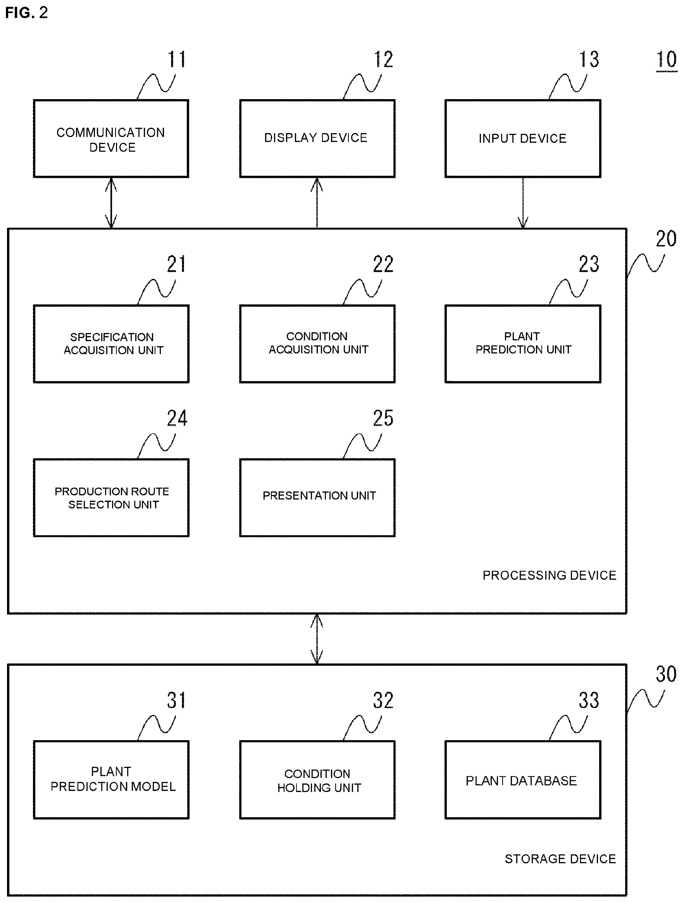

FIG. 2 shows a configuration of a design assistance device according to the embodiment. A design assistance device 10 includes a communication device 11, a display device 12, an input device 13, a processing device 20, and a storage device 30.

The communication device 11 controls wireless or wired communication. The communication device 11 transmits and receives data to and from other devices via a communication network such as the Internet. The display device 12 displays a display image generated by the processing device 20.
The input device 13 inputs an instruction to the processing device 20.

The storage device 30 stores data and computer programs used by the processing device 20. The storage device 30 stores a plant prediction model 31, a condition holding unit 32, and a plant database 33.

The plant prediction model 31 predicts execution of a process in constituent elements that constitute a plurality of production routes. The plant prediction model 31 may be a simulator or the like that individually predicts the execution of the process in the constituent elements such as a reactor, or may be a model or the like that comprehensively predicts the execution of the process in a plurality of constituent elements. The plant prediction model 31 may be a computational fluid dynamics (CFD) model or the like for simulating a state of a fluid inside the constituent elements such as a reactor. The plant prediction model 31 may be a surrogate model trained with learning data, which is actual data from operating the constituent elements, or simulation data calculated by a simulator for predicting the operation of the constituent elements. The plant prediction model 31 may be one that inputs input information such as a type, an amount, a temperature, and a pressure of a material, and a temperature, a pressure, a type, and an amount of a catalyst of a reaction, and outputs output information such as an amount, a yield, a reaction rate, an operation cost, a profit, and a carbon dioxide emission amount of a product.

The condition holding unit 32 holds information such as an air temperature, a humidity, construction conditions, and discharge conditions for waste such as carbon dioxide and waste liquid at a place where the fuel production plant 1 is installed.

The plant database 33 stores information regarding the fuel production plant 1. The plant database 33 holds conditions such as contents of a reaction route for producing a final product, a type, a price, performance, and installation conditions of each constituent element that constitutes the reaction route, a price and acquisition conditions of a material, and a price and a distribution route of the final product.

The processing device 20 includes a specification acquisition unit 21, a condition acquisition unit 22, a plant prediction unit 23, a production route selection unit 24, and a presentation unit 25. In terms of hardware components, these configurations are realized by a CPU of an arbitrary computer, a memory, a program loaded into the memory, and the like, but here, functional blocks realized by their cooperation are depicted. Therefore, it will be understood by those skilled in the art that these functional blocks can be realized in various forms by hardware alone, software alone, or a combination thereof.

The specification acquisition unit 21 acquires specifications required for the final product produced in the fuel production plant 1. The specifications may be a type, a composition, a purity, a demand amount, a yield, a price, and the like of the final product.

The condition acquisition unit 22 acquires conditions that can affect suitability at a location of the fuel production plant 1 of a plurality of production routes for producing the final product from a material. The condition acquisition unit 22 acquires, as the conditions, at least one of CAPEX, OPEX, acquisition conditions, and a useful life at the location of the fuel production plant 1 of at least one of electric power, a material, and constituent elements used for each of the plurality of production routes, a yield of the final product in the plurality of production routes, and discharge conditions at the location of the plant for waste discharged in each of the plurality of production routes, and the like.

The plant prediction unit 23 predicts a process executed in each of the plurality of production routes. The plant prediction unit 23 refers to the plant database 33 to acquire a plurality of production routes for producing the final product that meets the specifications acquired by the specification acquisition unit 21. The plant prediction unit 23 uses the plant prediction model 31 to predict a process executed in each of the plurality of production routes according to the conditions acquired by the condition acquisition unit 22.

The production route selection unit 24 selects a recommended production route in the fuel production plant 1 from the plurality of production routes, based on the specifications acquired by the specification acquisition unit 21 and the conditions acquired by the condition acquisition unit 22. The production route selection unit 24 calculates a construction cost, an operation cost, an operating rate, a profit, a product amount, a product yield, a carbon dioxide emission amount, and the like of the fuel production plant 1 when each of the plurality of production routes is adopted, based on a prediction result by the plant prediction unit 23. The production route selection unit 24 selects a production route that optimizes a predetermined objective function using a solution method for an optimal route problem or the like. The objective function may include any one of CAPEX, OPEX, a production unit price, a CO2 emission amount and a CO2 reduction amount of the fuel production plant 1, an operation cost of the fuel production plant 1 in a predetermined period, and a profit of the final product produced in the fuel production plant 1 in a predetermined period, or any combination of two or more thereof. Thereby, a configuration of the fuel production plant 1 in which an optimal production route is adopted can be accurately and quickly proposed according to specifications required for the fuel production plant 1 and a country or a region, etc. where the fuel production plant 1 is to be constructed.

The presentation unit 25 presents the production route selected by the production route selection unit 24 on the display device 12. The presentation unit 25 presents on the display device 12 at least one of a construction cost of the fuel production plant 1, an operation cost of the fuel production plant 1 in a predetermined period, and a profit of the final product produced in the fuel production plant 1 in a predetermined period, in a case where any of the plurality of production routes is adopted. The presentation unit 25 may display in a list or switchably display a construction cost of the fuel production plant 1, an operation cost of the fuel production plant 1 in a predetermined period, a profit of the final product produced in the fuel production plant 1 in a predetermined period, and the like for a plurality of candidate production routes, in a case where a production route is adopted. Thereby, advantages, problems, and the like of each of the plurality of production routes can be visualized. The presentation unit 25 may highlight parts of the production route that are superior or inferior to other production routes in terms of a construction cost, an operation cost, a profit, and the like by changing a color or the like.

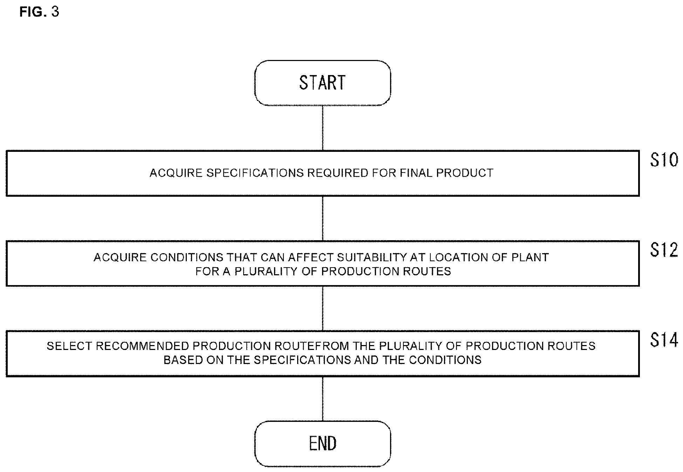

FIG. 3 is a flowchart showing a procedure of a design assistance method according to the embodiment. The specification acquisition unit 21 of the design assistance device 10 acquires specifications required for a final product produced in a plant that produces the final product from a material using electric power (S10). The condition acquisition unit 22 acquires conditions that can affect suitability at a location of the plant of a plurality of production routes for producing the final product from a material (S12). The production route selection unit 24 selects a recommended production route in the plant from the plurality of production routes, based on the acquired specifications and conditions (S14). Note that the order of S10, S12, and S14 may be arbitrary.

The present disclosure has been described above based on an embodiment. This embodiment is an exemplification, and it will be understood by those skilled in the art that various modifications can be made to combinations of the respective constituent elements and respective processing processes, and that such modifications are also within the scope of the present disclosure.

In the embodiment, the fuel production plant 1 that produces a fuel using electric power was described, but the technology of the present disclosure is also applicable to a case where chemicals, basic chemical products, and the like are produced using electric power.

### Reference Signs List

1 fuel production plant, 10 design assistance device, 21 specification acquisition unit, 22 condition acquisition unit, 23 plant prediction unit, 24 production route selection unit, 25 presentation unit, 31 plant prediction model, 32 condition holding unit, 33 plant database

## Claims

1. A design assistance device comprising:
a specification acquisition unit configured to acquire specifications required for a final product produced in a plant that produces the final product from a material using electric power;
a condition acquisition unit configured to acquire conditions at a location of the plant that can affect suitability of a plurality of production routes for producing the final product from the material; and
a production route selection unit configured to select a recommended production route in the plant from the plurality of production routes, based on the specifications acquired by the specification acquisition unit and the conditions acquired by the condition acquisition unit.

2. The design assistance device according to Claim 1, wherein:
the condition acquisition unit acquires, as the conditions, at least one of CAPEX, OPEX, acquisition conditions, and a useful life at the location of the plant of at least one of electric power, a material, and constituent elements used for each of the plurality of production routes, a yield of the final product in the plurality of production routes, and discharge conditions at the location of the plant for waste discharged in each of the plurality of production routes.

3. The design assistance device according to Claim 1 or 2, wherein:
the production route selection unit selects the recommended production route in the plant from the plurality of production routes, based on any one of the following parameters for the plant: CAPEX, OPEX, a production unit price, a CO2 emission amount and a CO2 reduction amount, an operation cost in a predetermined period, and a profit of the final product produced in a predetermined period, or any combination of two or more thereof.

4. The design support device according to Claim 3, further comprising:
a presentation unit configured to present any one of the following parameters for the plant: CAPEX, OPEX, a production unit price, a CO2 emission amount and a CO2 reduction amount, an operation cost in a predetermined period, and a profit of the final product produced in a predetermined period, or any combination of two or more thereof, in which any of the plurality of production routes is adopted.

5. A design assistance program for causing a computer to function as:
a specification acquisition unit configured to acquire specifications required for a final product produced in a plant that produces the final product from a material using electric power;
a condition acquisition unit configured to acquire conditions at a location of the plant that can affect suitability of a plurality of production routes for producing the final product from the material; and
a production route selection unit configured to select a recommended production route in the plant from the plurality of production routes, based on the specifications acquired by the specification acquisition unit and the conditions acquired by the condition acquisition unit.

6. A design assistance method causing a computer to execute the steps of:
acquiring specifications required for a final product produced in a plant that produces the final product from a material using electric power;
acquiring conditions at a location of the plant that can affect suitability of a plurality of production routes for producing the final product from the material; and
selecting a recommended production route in the plant from the plurality of production routes, based on the specifications and the conditions.
